# EUROPEAN PATENT APPLICATION

(11) **EP 2 040 404 A1**
(43) Date of publication of application: **25.03.2009**
(21) Application number: 07744480.0
(22) Date of filing: 31.05.2007
(51) Int. Cl.: H04J 11/00

(54) **RECEIVING DEVICE AND RECEIVING METHOD**

(30) Priority: 11.07.2006 JP 2006190066
(71) Applicant: Pioneer Corporation, Tokyo 153-8654 (JP)
(72) Inventor: OHSAWA, Susumu, Kawagoe-shi Saitama 350-8555 (JP)
(74) Representative: Haley, Stephen
(86) International application number: PCT/JP2007/061072
(87) International publication number: WO 2008/007503

(57) **Abstract**

A transmission path estimating part 220 makes use of a guard interval appended to each symbol portion in an OFDM signal, and thereby estimates the characteristic of a transmitting line from a transmitting device at a desired station to a receiving device 100. By means of this estimated result, when multipaths are present, a synchronous correcting part 210 carries out correction to bring the OFDM signal D1 of a base band frequency band from the desired station, which is outputted from an orthogonal detecting part 140, close to what it would be if multipaths were not present. Based upon this corrected OFDM signal DA, a synchronous control part 230 pursues frame synchronization (system synchronization) by detecting a synchronous pattern in the signal DA. As a result, the frame synchronization related to the OFDM signal can be made more accurate.

## Description

### Technical Field

The present invention relates to a receiving device and to a receiving method.

### Background Art

In recent years, in digital broadcasting or the like, as a transmission technique for digital data of a high quality level, a method of orthogonal frequency division multiplexing (hereinafter sometimes also termed OFDM) has been considered. With this OFDM method, generally, along with a plurality of data symbol portions being arranged in each frame, in order to prevent interference between the data symbol portions, a guard interval is appended at the head of each data symbol portion. These guard intervals have patterns which are the same as portions of predetermined length at the final ends of the data symbol portions. Moreover, for frame synchronization (system synchronization), in each frame, a frame synchronization portion is provided which has a predetermined data pattern.

With a receiving device which receives signals according to this OFDM method, various types of technique have been proposed for performing extraction of the frequency components of the data symbols at intervals such that interference between the data symbols is not engendered due to the occurrence of multipaths. As one such proposed technique, there is a technique of adjusting the start timing of extraction processing by discrete Fourier transformation of the frequency components of the data symbols, using the frame synchronization portions (refer to Patent Documents #1 and #2; this will hereinafter be termed the "prior art example".)
Patent Document #1: Japanese Laid-Open Patent Publication 2000-224142;
Patent Document #2: Japanese Laid-Open Patent Publication 2001-69119.

### DISCLOSURE OF THE INVENTION

### Problem to be solved by the invention

With the technique of the prior art example described above, it is assumed as a premise that, even if multipaths occur, it is possible to specify the positions of the frame synchronization portions in the first arriving wave and the delayed waves relating to each frame. However sometimes, if the distortion of the received signal due to the occurrence of multipaths is very bad, it is not possible to obtain the positions of the frame synchronization portions in the first arriving wave and the delayed waves with good accuracy, so that the pursuit of frame synchronization (system synchronization) fails.

If the pursuit of frame synchronization fails in this manner, then it becomes impossible for the receiving device to perform correct demodulation of the OFDM signal. Due to this a technique has long been desired which, in frame synchronization, can enhance the resistance against the occurrence of multipaths. Thus the answering of this type of requirement is considered as one of the problems which the present invention must solve.

Thus the present invention has been conceived in the light of the above described considerations, and it takes it as its object to provide a receiving device and a receiving method which, in relation to an OFDM signal, can pursue frame synchronization with good accuracy.

### Means for Solving the Problem

According to a first aspect thereof, the present invention is a receiving device which receives and demodulates a signal according to the orthogonal frequency division multiplexing system, in each frame of which are included a plurality of symbol portions which include synchronization symbol portions for frame synchronization, characterized by comprising: a transmission path estimating means which estimates the characteristics of the transmission path of said signal by using guard intervals which are appended to each said symbol portion; a correction means which corrects said symbol portions by using the result of estimation by said transmission path estimation means; a synchronous control means which controls the timing of extraction processing of frequency components included in said symbol portions so as to pursue frame synchronization based upon the results of correction by said correction means,; and a frequency component extraction means which performs extraction processing of frequency components included in said symbol portions, based upon synchronous control by said synchronous control means.

And, according to a second aspect thereof, the present invention is a receiving method which receives and demodulates a signal according to the orthogonal frequency division multiplexing system, in each frame of which are included a plurality of symbol portions which include synchronization symbol portions for frame synchronization, characterized by comprising: a transmission path estimation process in which the characteristics of the transmission path of said signal are estimated by using guard intervals which are appended to each said symbol portion; a correction process in which said symbol portions are corrected by using the result of estimation by said transmission path estimation process; and a synchronous control process in which the timing of extraction processing of frequency components included in said symbol portions is controlled so as to pursue frame synchronization based upon the results of correction by said correction process.

### BRIEF DESCRIPTION OF THE DRAWINGS

Fig. 1 is a structural block diagram schematically showing the structure of a receiving device according to an embodiment of the present invention;
Fig. 2 is a figure for explanation of the structure of an OFDM signal which is processed by the device of Fig. 1;
Fig. 3 is a structural block diagram for explanation of the structure of a transmission path estimating part in the device of Fig. 1;
Fig. 4 is a structural block diagram for explanation of the structure of a synchronous control part in the device of Fig. 1;
Fig. 5 is a timing chart for explanation of the timing of occurrence of correlation peaks in the results of correlation calculation by the transmission path estimating part of Fig. 3;
Fig. 6 is a timing chart for explanation of synchronous pattern detection timing by the synchronous control part of Fig. 4, and of the opening and closing timing of an FFT window; and
Fig. 7 is a figure for explanation of a variant embodiment.

### Best mode for carrying out the invention

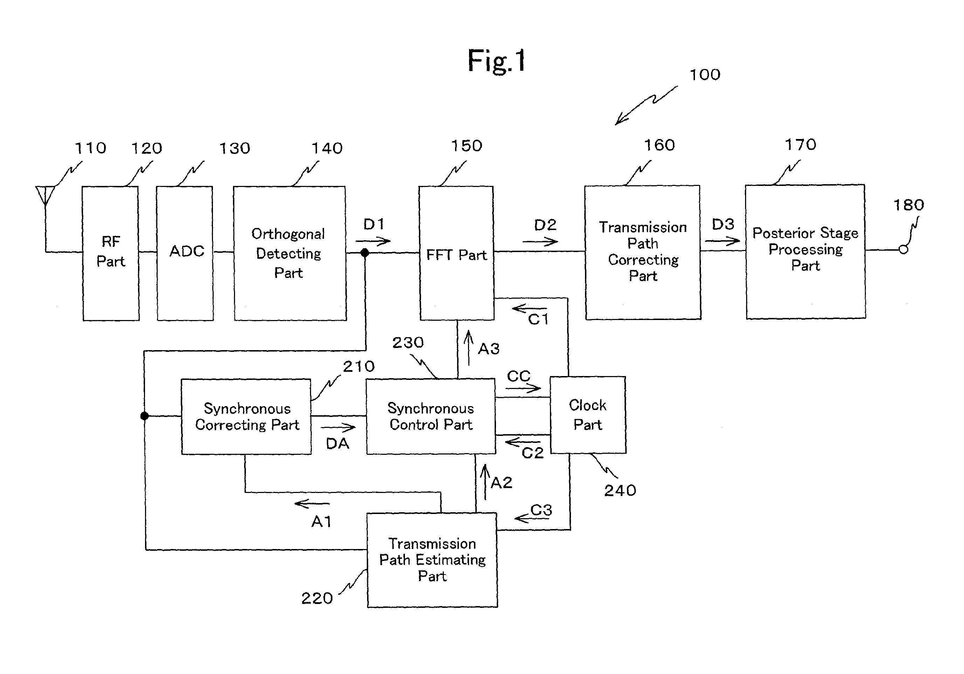

In the following, an embodiment of the present invention will be explained with reference to Figs. 1 through 6. It should be understood that, in the following explanation, the same reference symbols are appended to elements which are the same or are equivalent, and duplicated explanation is omitted.

### Structure

Fig. 1 is a structural block diagram schematically showing the structure of a receiving device 100 according to an embodiment of the present invention. As shown in Fig. 1, there are included an antenna 110, an RF part (an RF tuner part) 120, an ADC (analog-digital conversion part) 130, and an orthogonal detecting part 140. Moreover, this receiving device 100 includes a FFT part (a Fourier transformation part) 150 which serves as a frequency component extraction means, a transmission path correcting part 160, and a posterior stage processing part 170. And the receiving device 100 further includes a synchronous correcting part 210 which serves as a correction means, a transmission path estimating part 220 which serves as a transmission path estimation means, a synchronous control part 230 which serves as a synchronous control means, and a clock part (a basic clock signal generation part) 240.

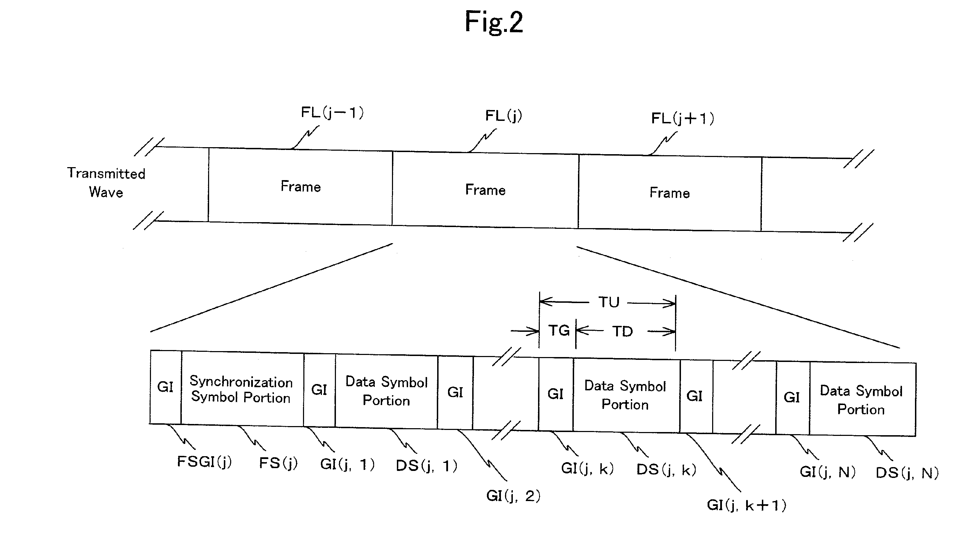

The antenna 110 receives wireless signals such as broadcast waves which are transmitted from a transmission device not shown in the figures, and the like. It should be understood that in this embodiment, from the transmission device, there is transmitted an OFDM signal of high frequency, in which an OFDM signal having the structure shown in Fig. 2 is mixed with a carrier wave of a frequency which has been allocated to the transmission device.

As shown in Fig. 2, this OFDM signal consists of a plurality of frames FL(1), FL(2), ... FL(j), .... And, as shown in Fig. 2, in the frame FL(j) there are included a synchronization symbol portion FS(j) and a guard interval (GI) FSGI(j) which is prefixed to the synchronization symbol portion FS(j), and data symbol portions DS(j, k) (where k=1, 2, ... N) and guard intervals GI(j, k) which are prefixed to these data symbol portions DS(j,k).

The length of the intervals for the synchronization symbol portions FS(j) and of the intervals for the data symbol portions DS(j,k) are time periods TD. Moreover, the lengths of the guard intervals FSGI(j) and GI(j, k) are time periods TG. Here, the time period TG is 1/n-th of the time period TD (where n>1, for example n=6).

Moreover, the guard intervals FSGI(j) and GI(j,k) have the same shapes as 1/n-th of their corresponding synchronization symbol portions FS(j) and data symbol portions DS(j,k) which follow after them, and are prefixed at the head ends of their corresponding synchronization symbol portions FS(j) and data symbol portions DS(j, k).

It should be understood that, in the following explanation, when referring to the synchronization symbol portions and the data symbol portions generically, they will simply be termed "symbol portions". Moreover, it will be supposed that the sum of the time period TG and the time period TD is denoted by TU. Furthermore, it will be supposed that a pilot pattern for transmission path estimation is included in each symbol portion.

Returning to Fig. 1, the RF part 120 comprises a high frequency amplifier, a local oscillator, a mixer, a band pass filter, and the like, none of which are shown in the figures. This RF part 120 converts an OFDM signal upon the carrier frequency of a desired station, from within the signal outputted from the antenna 110, into an OFDM signal of a predetermined intermediate frequency, and outputs this OFDM signal to the ADC 130.

The ADC 130 subjects the OFDM signal outputted from the RF part 120 to analog/digital conversion, and outputs the resulting signal. As a result, a stream of digital data which reflects the waveform of the OFDM signal outputted from the RF part 120 is outputted from the ADC 130 to the orthogonal detecting part 140 as a digitalized OFDM signal.

The orthogonal detecting part 140 separates the in-phase component signal and the orthogonal component signal in this OFDM signal which is outputted from the ADC 130, and performs conversion into a base band signal (a complex base band signal). And the orthogonal detecting part 140 outputs this converted base band signal as a signal D1 to the FFT part 150, the synchronous correcting part 210, and the transmission path estimating part 220.

The FFT part 150 performs Fourier transformation (fast Fourier transformation) upon the signal D1 which is outputted from the orthogonal detecting part 140, over an interval which is designated by an FFT window signal A3 from the synchronous control part 230, and extracts the frequency components which are included in the signal D1. As a result, demodulated vector data is generated. And the FFT part 150 outputs this demodulated vector data which has been generated to the transmission path correcting part 160 as a signal D2.

Based upon the pilot symbols for estimation of the transmission path, the transmission path correcting part 160 corrects each frequency component in the demodulated vector data in the signal D2 which is outputted from the FFT part 150, and thereby corrects the demodulated vector data. As a result corrected demodulated vector data is generated, in which distortion which has originated due to the occurrence of multipaths in the transmission path from the transmission device to this receiving device 100 has been corrected. The transmission path correcting part 160 outputs the corrected demodulated vector data which has thus been generated to the posterior stage processing part 170 as a signal D3.

The posterior stage processing part performs appropriate decoding after obtaining the symbol data which is included in the data symbol portions DS(j,k), based upon the signal D3 which has been outputted from the transmission path correcting part 160. The result of decoding which has been obtained in this manner is outputted from an output terminal 180.

If multipaths are present, then, based upon the transmission path estimated result A1 which has been notified from the transmission path estimating part 220, the synchronous correcting part 210 carries out correction so as to bring about a state close to what it would be if such multipaths were not present. The result of this correction is outputted to the synchronous control part 230 as the signal DA. It should be understood that the synchronous correcting part 210 may, for example, be constituted as an adaptive filter.

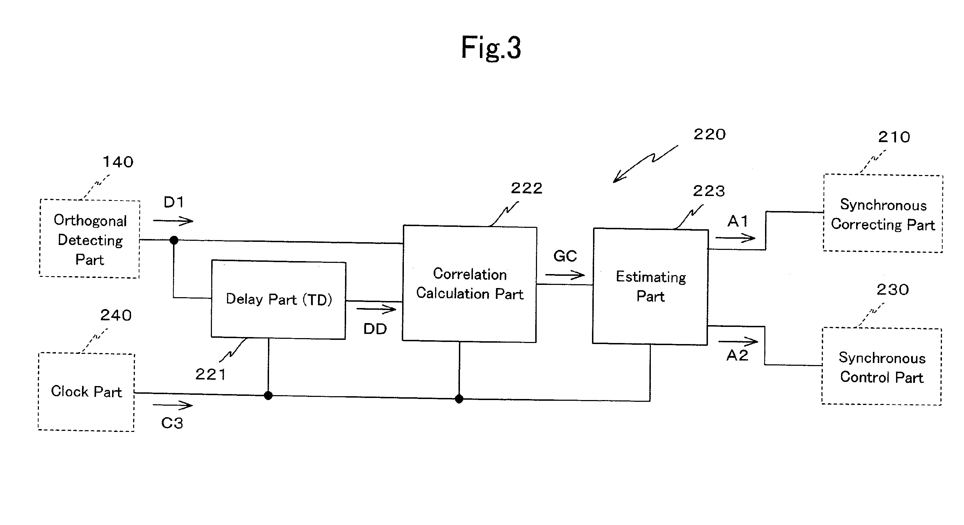

Based upon the signal D1 which is outputted from the orthogonal detecting part 140, the transmission path estimating part 220 estimates the characteristics of the transmission path from the transmission device to the receiving device 100. As shown in Fig. 3, this transmission path estimating part 220 comprises a delay part 221, a correlation calculation part 222, and an estimating part 223.

The delay part 221 delays the signal D1 which is outputted from the orthogonal detecting part 140 by just the time period TD (refer to Fig. 2), which is the interval length for a single symbol portion. In this manner, the delayed result is outputted to the correlation calculation part 222 as a signal DD. It should be understood that the delay part 221 is adapted to time the delay time period based upon a clock signal C3 which is supplied from the clock part 240.

The correlation calculation part 222 calculates the correlation amount between the signal D1 which is outputted from the orthogonal detecting part 140 and the signal DD which is outputted from the delay part 221, over the interval of the time period TG. In this correlation amount calculation, if the start time point of the period for correlation amount calculation is not only the time point at which the time period (TD-TG) has elapsed from the start time point of the symbol portion FS(j) or DS(j, k) in the first arriving wave of the signal D1 or in the delayed wave if multipaths are present, but also the start time point of the guard interval FSGI(j) or GI(j,k) in the signal DD, then a higher correlation amount is calculated than that at the time points in the neighborhood thereof. Due to this, the result of calculation by the correlation calculation part 222 has cyclical correlation peaks.

The correlation amount which has been calculated is sequentially outputted to the estimating part 223 as a signal GC. It should be understood that the correlation calculation part 222 is adapted to time the correlation calculation interval based upon the clock signal C3 which is supplied from the clock part 240.

The estimating part 223 extracts the correlation peaks from the signal GC which is outputted from the correlation calculation part 222. Next, the estimating part 223 distinguishes whether a correlation peaks which has been extracted is a one which originates in the first arriving wave related to the OFDM signal transmitted from the desired station, or is a one which originates in the delayed wave. This distinction is performed based upon the time period from the previous correlation peak to this correlation peak. In other words, if the time period from the previous correlation peak to this correlation peak is sufficiently longer than the time period TG, and is of the order of the time period (TD-TG) to the time period TD, then the estimating part 223 estimates that this correlation peak is one which is associated with the first arriving wave. On the other hand, if the time period from the previous correlation peak to this correlation peak is sufficiently shorter than the time period TD, and is of the order of the time period TG or less, then the estimating part 223 estimates that this correlation peak is one which is associated with the delayed wave.

Furthermore, if a first arriving wave and a delayed wave are present over the interval of the symbol portions, then the estimating part 223 estimates the electrical power of the delayed wave based upon the correlation peak value. Moreover, it estimates the delay period of the delayed wave with respect to the first arriving wave, based upon the time gap between the correlation peak caused by the first arriving wave and the correlation peak caused by the delayed wave. It should be understood that the estimating part 223 is adapted to time the delay time period, based upon the clock signal C3 which is supplied from the clock part 240.

The fact that, in the above estimation, a correlation peak has been detected which is estimated as being a correlation peak due to the first arriving wave, is directly notified to the synchronous control part 230 as a signal A2. Moreover, the estimated results for the electrical powers of the first arriving wave and the delayed wave, and for the delay time period of the delayed wave with respect to the first arriving wave, are notified to the synchronous correcting part 210 as a signal A1.

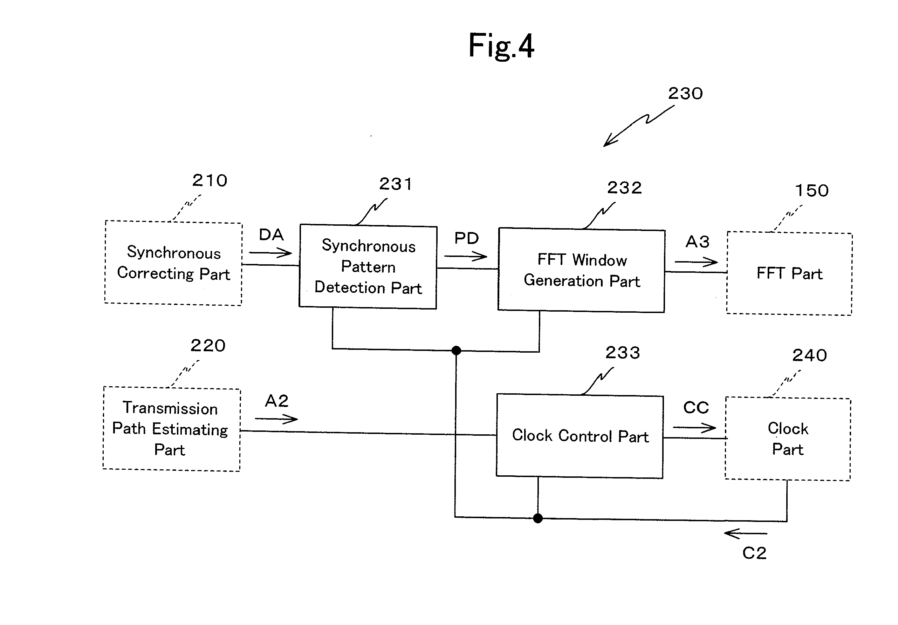

The synchronous control part 230 performs control of the frame synchronization based upon the signal DA which is outputted from the synchronous correcting part 210, and performs generation of an FFT window, which indicates the interval for Fourier transform processing by the FFT part 150. Furthermore, the synchronous control part 230 controls the clock part 240 based upon the signal A2 which is outputted from the transmission path estimating part 220. As shown in Fig. 4, this synchronous control part 230 comprises a synchronous pattern detection part 231, a FFT window generation part 232, and a clock control part 233.

The synchronous pattern detection part 231 detects a synchronous pattern, which is a pattern specified by a synchronization symbol portion within the signal DA which is outputted from the synchronous correcting part 210. In this embodiment, this detection of a synchronous pattern is performed by sequentially calculating the correlation amount over the interval of the time period TD between the same pattern as the specified synchronous pattern which is included in the OFDM signal from the desired station and the signal DA. In this case, if the synchronous pattern is different for each transmitting station, then, when the desired station has been selected, an identifier for the desired station or the specified synchronous pattern for the desired station is notified from a tuning control part not shown in the figures to the synchronous pattern detection part 231.

Thus, if multipaths are occurring, at least the portion of the signal DA which corresponds to the synchronization symbol portion FS(j) is brought by the synchronous correcting part 210 to a state which is close to its state when multipaths are not occurring. Due to this, the result of the correlation amount calculation by the synchronous pattern detection part 231 reliably comes to have a correlation peak at the end time point of the synchronization symbol portion FS(j) in the first arriving wave. It should be understood that the influence of the delayed wave remains in the portion of the signal DA which corresponds to the synchronization symbol portion FS(j), and, even if correlation peaks are present which correspond to the synchronization symbol portion FS(j) of the delayed wave, it is still possible to specify the end time point of the synchronization symbol portion FS(j) in the first arriving wave from the time difference between some correlation peak and the previous correlation peak. Thus the synchronous pattern detection part 231 is adapted to decide that it has detected the synchronous pattern, upon detecting a correlation peak after the elapsing of an equivalent time period (of the order of the time period TU) from the correlation peak directly before.

If a synchronous pattern is detected, then directly the fact that this synchronous pattern has been detected is outputted to the FFT window generation part 232 as a signal PD. It should be understood that the synchronous pattern detection part 231 is adapted to time the synchronous pattern detection calculation interval and the correlation peak time period interval, based upon the clock signal C2 which is supplied from the clock part 240.

The FFT window generation part 232 performs generation of an FFT window based upon the signal PD which is outputted from the synchronous pattern detection part 231. When generating this FFT window, after the detection of a synchronous pattern has been notified by the signal PD, the FFT window generation part 232 generates an FFT window by opening the FFT window when the time periods (TX + (k-1) · TU) (where TX≦TG and k=1, 2, ... N+1) elapse, and by closing the FFT window when the time period TD elapses thereafter. It should be understood that the FFT window generation part 232 is adapted to time the time periods (TX + (k-1) · TU) and the time period TD based upon the clock signal C2 which is supplied from the clock part 240. Moreover, the time period TX is set to a value which is determined in advance at the design stage.

The clock control part 233 controls the frequencies of the clock signals C 1 through C3 which are generated by the clock part 240, based upon the signal A2 which is outputted from the transmission path estimating part 220. During this frequency control, the clock control part 233 first times the time interval of the correlation peak which it has inferred is the correlation peak due to the first arriving wave as notified by the signal A2, using the clock signal C2 which is supplied from the clock part 240. Next, the clock control part 233 makes a decision as to whether or not the result of this timing agrees with the time period which is determined as the transmission specification of the desired station.

If the result of this decision as to agreement of these time periods is negative, then the clock control part 233 makes a decision as to whether or not the amount by which they disagree with one another is of the order of change in the characteristic of the clock part 240 due to the passage of time, or of the order due to change of temperature. On the other hand, if the result of this decision as to agreement of these time periods is affirmative, then the clock control part 233 outputs a clock frequency change command to the clock part 240 as a signal CC, so as to make the timing result based upon the signal A2 agree with the transmission specification of the desired station.

It should be understood that, if the result of the amount of disagreement decision is negative, then the clock control part 233 infers that, due to change of the transmission path environment, the path of the first arriving wave at the previous correlation peak detection time point has disappeared at the newest correlation peak detection time point, or that a new path for the first arriving wave has occurred at the newest correlation peak detection time point, and is adapted not to issue any clock frequency change command. Moreover, if the result of the time period disagreement decision is affirmative, then the clock control part 233 is adapted not to issue any clock frequency change command.

The clock part 240 changes the frequencies of the clock signals C1, C2, and C3 based upon the signal CC which is outputted from the synchronous control part 230. Due to this, the operation executed by the FFT part 150, the transmission path estimating part 220, and the synchronous control part 230 accurately corresponds to the time interval intended by the desired station.

### Operation

Next, the processing for reception of an OFDM signal by the receiving device 100 which has the structure as described above will be explained. It should be understood that, in the following explanation, particular attention will be focused upon the case in which multipaths are present, and a first arriving wave and a single delayed wave are received.

When the RF part 120 receives with the antenna 110 a signal including an OFDM signal which has been transmitted from the desired station, the RF part 120 converts this OFDM signal on the carrier frequency of the desired station which has been specified by a tuning control part not shown in the figures into an OFDM signal of a predetermined intermediate frequency. This OFDM signal of the predetermined intermediate frequency is converted into a base band signal by the orthogonal detecting part 140 after having been digitalized by the ADC 130, and is outputted as the signal D1 to the FFT part 150, the synchronous correcting part 210, and the transmission path estimating part 220.

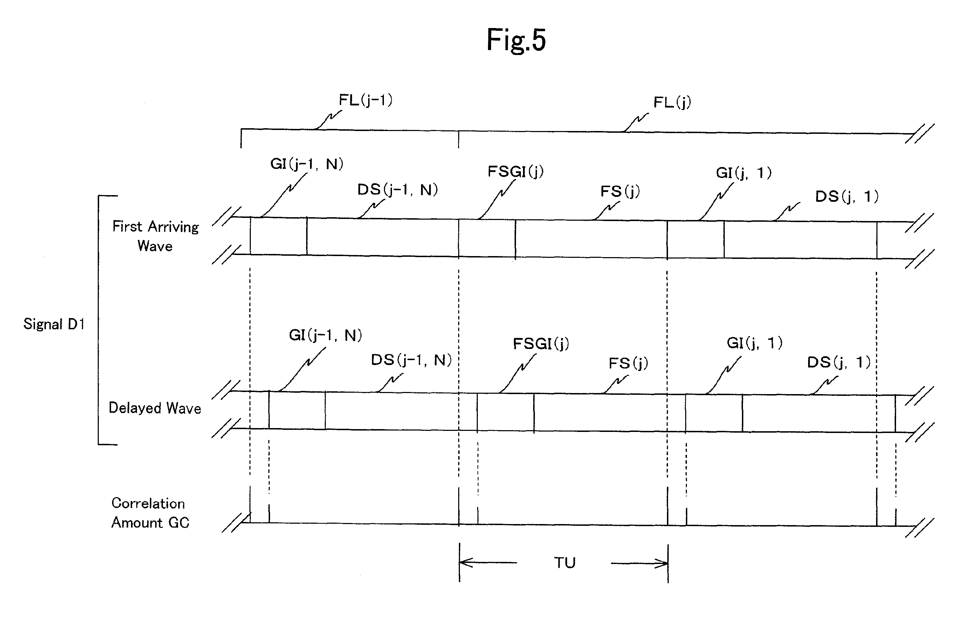

This signal D1 may, for example, be one which consists of a combination of a first arriving wave and a delayed wave, as shown in Fig. 5. The transmission path estimating part 220, which has received the signal D1, estimates the characteristics of the transmission path from the transmission device to the receiving device 100, based on the signal D1. In other words, in the transmission path estimating part 220, the correlation calculation part 222 repeatedly calculates the correlation amounts over the interval of the time period TG between the signal DD which is produced by the delay part 221 delaying the signal D 1 by just the time period TD, and the signal D1. As a result, as shown in Fig. 5, correlation peaks are generated at the end time points of the symbol portions of the first arriving wave and the delayed wave (in Fig. 5, the end time points DS(j-1,N), the end time points FS(j), and so on). The results of calculation by the correlation calculation part 222, including this type of correlation peak, are sent to the estimating part 223 as the signal GC.

The correlation peaks in the signal GC are extracted by the estimating part 23. And, when a correlation peak which is estimated to be due to the first arriving wave is detected, then the estimating part 223 immediately notifies the synchronous control part 230.

Moreover, along with estimating the electrical powers of the first arriving wave and of the delayed wave over the interval of each symbol portion based upon the correlation peak values, also the delay time period of the delayed wave with respect to the first arriving wave is estimated based upon the time interval between the correlation peaks which are due to the first arriving wave and the correlation peaks which are due to the delayed wave. This result of estimation of the electrical powers of the first arriving wave and of the delayed wave over the interval of each symbol portion, and this result of estimation of the delay time period, are sent to the synchronous correcting part 210.

When the fact that the above described correlation peak which is estimated to be due to the first arriving wave has been detected is notified by the signal A2, in the synchronous control part 230, the clock control part 233 times the period from the previous correlation peak estimated to be due to the previous first arriving wave. And, based upon the result of this timing, the clock control part 233 controls the clock part 240, and adjusts the frequencies of the clock signals C1, C2, and C3 to ones at which operation which accurately corresponds to the time interval intended by the desired station is executed by the FFT part 150, the transmission path estimating part 220, and the synchronous control part 230.

On the other hand, when the estimated results for the electrical powers of the first arriving wave and of the delayed wave and of the delay time period in the interval of the symbol portion described above are received, then, based upon the estimated results which have thus been received, until the next estimated results are received, the synchronous correcting part 210 performs correction so as to bring the signal D1 close to what its signal state would be if multipaths had not occurred. As a result, correction is performed over at least the interval of the synchronization symbol portion FS(j) based upon the estimated results for the electrical powers of the first arriving wave and of the delayed wave and of the delay time period in the interval of the data symbol portion DS(j-1,N), and correction is performed over at least the interval of the data symbol portion DS(j,1) based upon the estimated results for the electrical powers of the first arriving wave and of the delayed wave and of the delay time period in the interval of the synchronization symbol portion FS(j). Moreover, correction is carried out over at least the interval of the data symbol portion DS(j,p+1) based upon the estimated results for the electrical powers of the first arriving wave and of the delayed wave and of the delay time period in the interval of the data symbol portion DS(j, p) (where p=1∼(N-1)). The result of this correction is sent to the synchronous control part 230 as the signal DA.

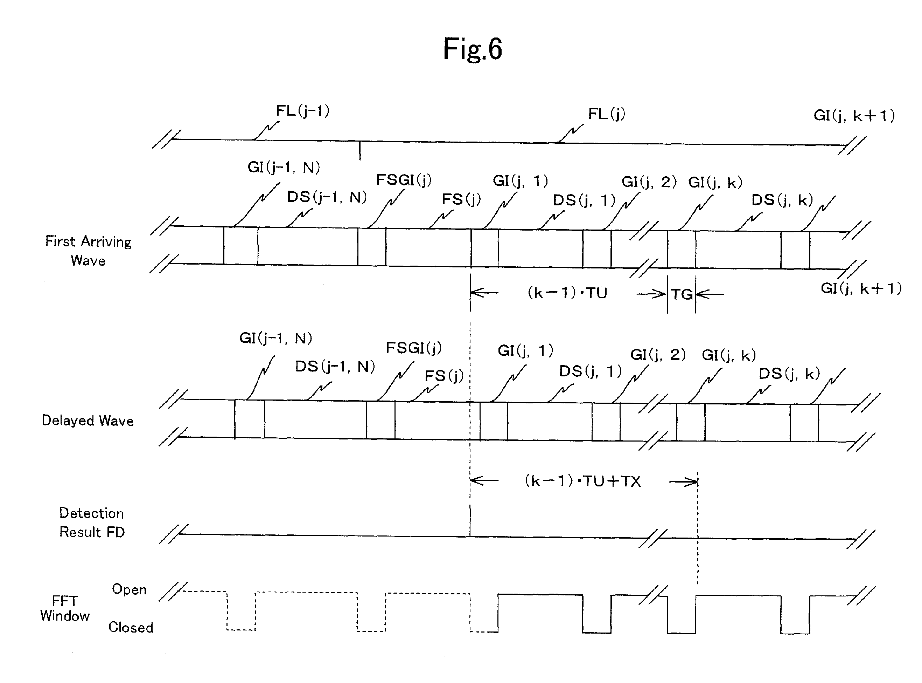

In the synchronous control part 230 which has received this signal DA from the synchronous correcting part 210, the synchronous pattern detection part 231 detects the synchronous pattern in the signal DA. As shown in Fig. 6, for each frame, this is detected by the synchronous pattern detection part 231 at the end time point of the interval of the synchronization symbol portion of the first arriving wave (in Fig. 6, for the frame FL(j), the example is shown of the end time point of the synchronization symbol portion FS(j) of the first arriving wave). The fact that the synchronous pattern has thus been detected is immediately notified to the FFT window generation part 232.

Upon receipt of this notification that a synchronous pattern has been detected, the FFT window generation part 232 generates the FFT window signal A3 which specifies the interval over which Fourier transformation should be performed within that frame. In concrete terms, the FFT window generation part 232 opens the FFT window when the time periods (TX+(k-1) · TU) (where TX≦TG and k=1, 2, ... N+1) have elapsed from the notification that the synchronous pattern has been detected, and closes the FFT window when the time period TD elapses thereafter. This situation is shown in Fig. 6 for the frame FL(j). The FFT window signal A3 which is generated in this manner is sent to the FFT part 150.

During the interval that the FFT window is opened by the FFT window signal A3, the FFT part 150 performs Fourier transformation (fast Fourier transformation) upon the signal D1 which is outputted from the orthogonal detecting part 140, and thereby extracts the frequency components which are included in that signal D1. It should be understood that this Fourier transformation processing by the FFT part 150 is executed in synchronization with the clock signal C1 which is supplied from the clock part 240.
As a result, demodulated vector data is generated, and is sent to the transmission path correcting part 160 as the signal D2.

Subsequently, transmission path correction for the demodulated vector data is performed by the transmission path correcting part 160, and moreover, after the symbol data which is contained in the data symbol portions DS(j,k) has been obtained, decoding thereof is performed by the posterior stage processing part 170. And the decoded result which has been obtained in this manner is outputted from the output terminal 180.

Although, in the above, the case has been explained in which multipaths occur, and in which a first arriving wave and a single delayed wave have been received, even if a first arriving wave and a plurality of delayed waves have been received, still processing of the OFDM signal of the desired station which has been received by the antenna 110 may be performed in a similar manner to that described above. Moreover, if multipaths are not occurring and only the first arriving wave is being received, then correction processing is not performed by the synchronous correcting part 210, but rather the system operates in a mode in which the output signal D1 from the orthogonal detecting part 140 comes to be transmitted to the synchronous control part 230 just as it is without alteration. And a similar synchronous control procedure to the one described above is performed by the synchronous control part 230.

As has been explained above, in this embodiment, the transmission path estimating part 220 estimates the characteristics of the transmission path from the transmitting device at the desired station to the receiving device 100 by using the guard intervals which are appended to each of the symbol portions in the OFDM signal. And, using the result of this estimation, if multipaths are occurring, the synchronous correcting part 210 performs correction of the OFDM signal D1 on the base band frequency band from the desired station, which is outputted from the orthogonal detecting part 140, so as to bring it close to the state which it would assume if the multipaths were not occurring.

Based upon this corrected (after amendment) OFDM signal DA, the synchronous control part 230 creates the FFT window signal A3 which designates the interval for Fourier transformation processing by the FFT part 150, with the aim of frame synchronization (system synchronization) by detecting the synchronous pattern in the signal DA. And the various frequency components within the symbol portions of the signal D1 are extracted by Fourier transformation being performed upon the signal D1 according to this FFT window designation by the FFT window signal A3.

Accordingly, even if the synchronous pattern in the signal D1 is greatly distorted due to the occurrence of multipaths, it is possible to anticipate frame synchronization in relation to the OFDM signal with good accuracy.

Furthermore, in this embodiment, it is arranged for the synchronous control part 230 to control the frequencies of the clock signals C1, C2, and C3 which are generated by the clock part 240 based upon the results of estimation by the transmission path estimating part 220, and for operation which accurately corresponds to the time interval intended by the desired station to be executed by the FFT part 150, the transmission path estimating part 220, and the synchronous control part 230. Due to this, it is possible to perform the demodulation processing of the OFDM signal with good accuracy.

### Modified embodiments

The present invention is not to be considered as being limited to the embodiment described above; it may be changed in various ways.

For example while, in the embodiment described above, an example was shown in which the synchronous correcting part 210 was constituted as an adaptive filter, it could also be made in some other manner than as an adaptive filter.

Furthermore, in the embodiment described above, it is arranged to detect the synchronous pattern in the signal DA by repeatedly performing correlation calculation between the synchronous pattern which is determined for each of the desired stations, and the signal DA. By contrast, it would also be possible to arrange to perform the detection of the synchronous pattern in the signal DA, not by performing any correlation calculation, but rather by a method which is appropriate to the type of the synchronous pattern which is determined for each of the desired stations.

Moreover, in the embodiment described above, it is arranged for the synchronous control part 230 to control the frequencies of the clock signals C1, C2, and C3 which are generated by the clock part 240 based upon the results of estimation by the transmission path estimating part 220, and for operation which accurately corresponds to the time interval intended by the desired station to be executed by the FFT part 150, the transmission path estimating part 220, and the synchronous control part 230. By contrast, it would also be possible to arrange not to use this technique of clock signal frequency control, but to perform operation which accurately corresponds to the time interval intended by the desired station by calculation processing by the FFT part, the transmission path estimating part, and the synchronous control part, based upon the result of extraction of the correlation peaks by the transmission path estimating part, using the guard intervals.

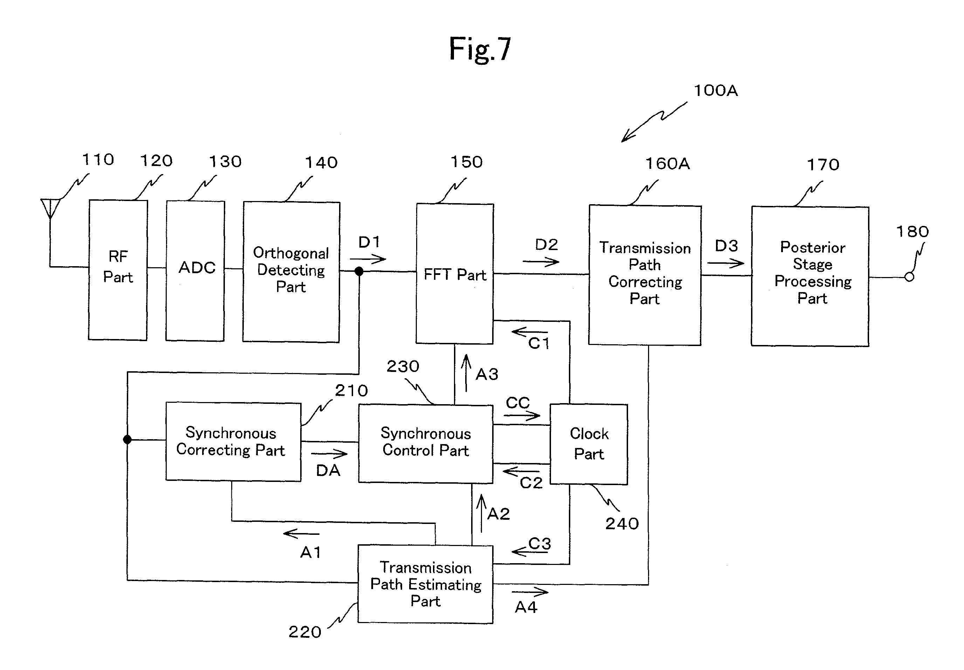

Furthermore while, in the embodiment described above, it was arranged for the pilot pattern for transmission path estimation to be included in each of the symbol portions, if the pilot pattern for transmission path estimation is not included in each of the symbol portions, then it is possible to arrange to perform the reception processing for the OFDM signal by using, for example, a receiving device 100A having the structure shown in Fig. 7. That is to say, instead of the transmission path correcting part 160 of the receiving device 100 of the embodiment described above, it would also be acceptable to arrange to provide a transmission path correcting part 160A which performs transmission path correction for the demodulated vector data which is outputted from the FFT part 160, based upon the estimated results for the electrical powers of the first arriving wave and the delayed waves, and for the delay time period, over the interval of the symbol portions, which are the results of transmission path estimation by the transmission path estimating part 230. It should be understood that, in Fig. 7, to elements which are the same or equivalent to elements of the embodiment described above, the same reference symbols are appended, and duplicated explanation is omitted.

## Claims

1. A receiving device which receives and demodulates a signal according to the orthogonal frequency division multiplexing system, in each frame of which are included a plurality of symbol portions which include synchronization symbol portions for frame synchronization, **characterized by** comprising:
a transmission path estimating means which estimates the characteristics of the transmission path of said signal by using guard intervals which are appended to each said symbol portion;
a correction means which corrects said symbol portions by using the result of estimation by said transmission path estimation means;
a synchronous control means which controls the timing of extraction processing of frequency components included in said symbol portions so as to pursue frame synchronization based upon the results of correction by said correction means; and
a frequency component extraction means which performs extraction processing of frequency components included in said symbol portions, based upon synchronous control by said synchronous control means.

2. A receiving device according to Claim 1, **characterized in that** said transmission path estimation means comprises:
a guard interval correlation calculation means which performs calculation of correlation amounts between said guard intervals appended to said symbol portions, for each said symbol portion; and
an estimation means which, in the case of occurrence of multipaths, estimates the delay time periods of each delayed wave after the first arriving wave, and the electrical power of said first arriving wave and the electrical power of each of said delayed waves, based upon the results of calculation by said guard interval correlation calculation means.

3. A receiving device according to Claim 2, **characterized in that:** said estimation means further estimates the position of a data symbol portion in said first arriving wave, based upon the guard interval correlation calculation means; and said synchronous control means controls the processing time for said extraction processing based upon the results of estimation by said estimation means: of the position of a specified symbol portion in said frame in said first arriving wave, using said specified symbol portion and the guard interval which is appended to said specified symbol portion; and of the position of a directly previous symbol portion to said specified symbol portion in said frame in said first arriving wave, using said directly previous symbol portion and the guard interval appended to said directly previous symbol portion.

4. A receiving device according to any one of Claims 1 through 3, **characterized by** further comprising a transmission path correction means which performs transmission path correction related to the result of extraction by said frequency component extraction means, in the case of occurrence of said multipaths, in consideration of the delay time periods of each delayed wave after the first arriving wave, and in consideration of the results of estimation by said estimation means related to the electrical power of said first arriving wave and the electrical power of each of said delayed waves.

5. A receiving method which receives and demodulates a signal according to the orthogonal frequency division multiplexing system, in each frame of which are included a plurality of symbol portions which include synchronization symbol portions for frame synchronization, **characterized by** comprising:
a transmission path estimation process in which the characteristics of the transmission path of said signal are estimated by using guard intervals which are appended to each said symbol portion;
a correction process in which said symbol portions are corrected by using the result of estimation by said transmission path estimation process; and
a synchronous control process in which the timing of extraction processing of frequency components included in said symbol portions is controlled so as to pursue frame synchronization based upon the results of correction by said correction process.
